# EUROPÄISCHE PATENTANMELDUNG

(11) **EP 2 514 327 A1**
(43) Veröffentlichungstag der Anmeldung: **24.10.2012**
(21) Anmeldenummer: 12161007.5
(22) Anmeldetag: 23.03.2012
(51) Int. Cl.: A23L 3/18, A23L 2/46, A23L 2/76, A23C 3/033

(54) **Vorrichtung und Verfahren zum Behandeln eines flüssigen Lebensmittelproduktes**

(30) Priorität: 20.04.2011 DE 102011007787
(71) Anmelder: Krones AG, 93073 Neutraubling (DE)
(72) Erfinder: Weinzierl, Matthias, 84174 Eching (DE); Höller, Stefan, 93059 Regensburg (DE); Glaser, Werner, 85395 Wolfersdorf (DE)
(74) Vertreter: Grünecker, Kinkeldey, Stockmair & Schwanhäusser

(57) **Zusammenfassung**

In einer Vorrichtung (V) zum Behandeln eines Feststoffe (T) enthaltenden, flüssigen Lebensmittelproduktes (P) mit einem mit dem Lebensmittelprodukt (P) unter Druck (P1) beschickten Wärmetauscher (W) und/oder mit einem reduzierten Druck (P3) beschickten Entgaser (E), dem eine Druckreduziervorrichtung (D) nach- bzw. vorgeschaltet ist, weist die Druckreduziervorrichtung (D) wenigstens eine von dem Lebensmittelprodukt (P) durchströmte Bremspumpe (8) auf. Verfahrensgemäß wird der Druck, mit dem das Lebensmittelprodukt (P) durch die Bremspumpe (8) hindurchgefördert wird, über eine Antriebsbewegung der Bremspumpe (8) abgebaut.

## Beschreibung

Die Erfindung betrifft eine Vorrichtung gemäß Oberbegriff des Patentanspruchs 1 sowie ein Verfahren gemäß Oberbegriff des Patentanspruchs 10.

In der Abfülltechnologie von flüssigen Lebensmittelprodukten, wie Fruchtsäften, Milchprodukten oder dgl., werden beispielsweise Vorrichtungen zum Pasteurisieren und/oder Entgasen verwendet, in denen das Lebensmittelprodukt unter Druck durch einen Wärmetauscher gefördert und gegebenenfalls nachfolgend in einen Entgaser (z.B. Vakuumbehälter) geliefert wird. Im Hinblick auf hohen Durchsatz und effizienten Wärmeaustausch sowie einen exakt regelbaren Produktstrom wird das Lebensmittelprodukt mit relativ hohem Druck durch den Wärmetauscher gefördert. Dieser hohe Druck muss im weiteren Prozessablauf stromab des Wärmetauschers abgebaut oder zumindest signifikant abgebaut werden, insbesondere dann, wenn das Lebensmittelprodukt anschließend in einen Entgaser geliefert wird, in welchem die Entgasungswirkung nur bei relativ geringem Druck oder Unterdruck abläuft. Zudem wird bei diesem Verfahren relativ viel Energie ungenutzt vergeudet.

In solchen Vorrichtungen ist es deshalb bekannt, ausgangs des Wärmetauschers und/oder stromauf des Entgasers eine Druckreduziervorrichtung vorzusehen, in welcher der notwendige Druckabbau gesteuert abläuft. Die bekannten Druckreduziervorrichtungen umfassen wenigstens ein Regelventil, das über wenigstens eine feste oder variable Drosselstelle das notwendige Druckgefälle erzeugt. Das Durchströmen der Drosselstelle stellt für das Lebensmittelprodukt eine relativ hohe mechanische Belastung dar, auch da dere Druckabbau nahezu schlagartig erfolgt. Bei relativ homogenen und/oder teils auch hochviskosen flüssigen Lebensmittelprodukten ist diese mechanische Belastung gegebenenfalls ohne nachdrücklichen Schaden für die Qualität in Kauf zu nehmen. Bei Feststoffe enthaltenden und gegebenenfalls niederviskosen flüssigen Lebensmittelprodukten, wie Fruchtsäften mit Fasern, Pulpen, Fruchtstückchen, Sacs oder dgl. bzw. Milchprodukten mit Zusätzen, kann jedoch die mechanische Belastung in der relativ engen Spaltweite der Drosselstelle (damage rate) Beschädigungen der festeren Bestandteile hervorrufen und somit die Qualität des behandelten Lebensmittelproduktes nachhaltig beeinträchtigen. Ein weiterer Nachteil besteht darin, dass sich Feststoffe in einem engen Drosselspalt sammeln und festsetzen und den vorbestimmten Drosseleffekt zeitweise verstärken können, so dass sich die vorbestimmte Druckdifferenz beim Druckabbau nicht ausreichend gleichförmig halten lässt. Der Druckabbau nur über wenigstens einen Drosselspalt kann auch zu unerwünschter Erwärmung oder Kavitation führen, was sowohl für das Lebensmittelprodukt als auch das Regelventil ungünstig ist. Schließlich bedeutet ein Druckabbau über wenigstens einen Drosselspalt eine Energievergeudung, weil die im Lebensmittelprodukt enthaltene Druck- oder kinetische Energie durch Reibung und Scherkräfte in nicht nutzbare Wärmeenergie umgewandelt bzw. vernichtet wird.

Der Erfindung liegt die Aufgabe zugrunde, eine Vorrichtung und ein Verfahren der eingangs genannten Art zu schaffen, mit denen ein Druckabbau speziell in einem Feststoffe enthaltenden flüssigen Lebensmittelprodukt für das Produkt und die Druckreduziervorrichtung schonender durchführbar ist als bisher. Teil der Aufgabe ist es ferner, beim Druckabbau aus dem Lebensmittelprodukt entnommene Energie nicht ungenutzt aufzuzehren, sondern gegebenenfalls in einem brauchbaren Ausmaß zurückzugewinnen oder wiederzuverwenden.

Die gestellte Aufgabe wird mit den Merkmalen des Patentanspruchs 1 und des Patentanspruchs 10 gelöst.

Die Bremspumpe in der Vorrichtung wirkt wie ein Hydromotor, der vom unter Druck stehenden Lebensmittelprodukt angetrieben wird und dabei den Druck ohne enge Drosselspalte hauptsächlich über mit einer Drehbewegung verbundene Expansion abbaut. Die Bremspumpe fungiert als Hydromotor, der das Lebensmittelprodukt mit dem erhöhten Förderdruck aufnimmt, von ihm angetrieben wird, und drucklos oder mit signifikant reduziertem Druck entspannt oder weitestgehend entspannt abgibt. Dabei braucht das Lebensmittelprodukt keine engen Spalten zu passieren, sondern es kann sich in der Bremspumpe schonend entspannen, so dass die Feststoffe keine Schäden erleiden und auch die Bremspumpe selbst keiner nennenswerten mechanischen Belastung ausgesetzt wird. Der Druckabbau erfolgt außerdem verteilt über die von der Bremspumpe beim Durchströmen des Lebensmittelproduktes aufgenommene Antriebsleistung. Bei der Behandlung des Lebensmittelproduktes erleiden die festeren Bestandteile keine Schäden durch den Druckaufbau, so dass das Lebensmittelprodukt gleichbleibend hohe Qualität hat.

Verfahrensgemäß wird der Druckabbau stromab des Wärmetauschers und/oder stromauf des Entgasers ohne nennenswerte Schäden an den Feststoffen und damit günstig für die Qualität des Lebensmittelproduktes beim Durchströmen und Antreiben der Bremspumpe ausgeführt, die das unter Druck geförderte Lebensmittelprodukt allmählich und über eine relativ lange Durchströmstrecke entspannt und dabei Antriebsenergie aufnimmt. Die Bremspumpe kann nur durch das Lebensmittelprodukt angetrieben werden, oder mit einer gesteuerten Drehzahl fremdangetrieben oder auch gebremst werden. Die Bremspumpe gibt einen weitgehend konstanten Produktstrom ab und kann, bei entsprechender Auslegung, relativ große Strömungsraten verarbeiten und eine relativ große Druckdifferenz abbauen.

Bei einer zweckmäßigen Ausführungsform der Vorrichtung ist die Bremspumpe eine zumindest teilweise vom Lebensmittelprodukt angetriebene Verdrängerpumpe, wie eine Zellenradschleuse, eine Zahnradpumpe oder eine Membranpumpe. Die beim Druckabbau aufgenommene Leistung wird in eine Drehbewegung umgewandelt. Der Druckabbau wird durch diese Drehbewegung feinfühlig steuerbar. Eine Zellenradschleuse oder Membranpumpe bietet den zusätzlichen Vorteil, dass das Lebensmittelprodukt keinen oder keinen nennenswerten Kontakt mit beispielsweise geschmierten Komponenten der Bremspumpe hat. Eine Zellenradschleuse, eine Zahnradpumpe oder eine Membranpumpe bietet ferner den Vorteil, den Druckabbau auf einen relativ großen Drehbereich bzw. relativ große Strömungslänge zu verteilen, ohne enge Drosselspalte einzusetzen, was für die Qualität des behandelten Lebensmittelproduktes von Vorteil ist.

Bei einer zweckmäßigen Ausführungsform der Vorrichtung ist stromauf des Wärmetauschers, der beispielsweise eine Vorwärmsektion der Vorrichtung darstellen kann, eine mit elektrischer Primärenergie angetriebene Förderpumpe vorgesehen, die im Lebensmittelprodukt den für die Durchströmung des Wärmetauschers erforderlichen Förderdruck und Volumenstrom erzeugt, der für eine effiziente und vorbestimmte Wärmetauschwirkung benötigt wird und eine hohe Durchsatzrate ermöglicht. Zweckmäßig ist die Förderpumpe eine Schraubspindelpumpe oder eine Membranpumpe, die mit der Konsistenz des die festeren Bestandteile enthaltenden Lebensmittelproduktes gut zurechtkommt, obwohl auch andere Pumpentypen verwendbar sind.

Bei einer zweckmäßigen Ausführungsform der Vorrichtung ist der Entgaser dem Wärmetauscher nachgeordnet und befindet sich die zumindest eine Bremspumpe in einer Förderstrecke vom Wärmetauscher zum Entgaser. Dieses Konzept ist nicht nur im Hinblick auf eine einwandfreie Reinigung zweckmäßig, sondern stellt auch sicher, dass der Druckabbau weder das gleichmäßige Ausströmen aus dem Wärmetauscher noch das gleichmäßige Einströmen in den Entgaser beeinflusst.

Um den Druckabbau in der Bremspumpe präzise einstellen zu können, kann bei einer weiteren Ausführungsform die Bremspumpe elektrisch angetrieben werden oder elektrisch oder mechanisch gebremst werden. Das elektrische Antriebsprinzip kann beispielsweise in einer Anlaufphase genutzt werden, bis sich ein gleichmäßiger Produktstrom oder Massenstrom eingestellt hat, beispielsweise auch um den Anlaufwiderstand der Bremspumpe zu überwinden. Hingegen kann dann bei kontinuierlichem Prozessablauf eine permanente Bremsung mit fester oder steuerbarer Intensität zweckmäßig sein, um eine gleichbleibende vorbestimmte Druckdifferenz abzubauen.

Um die beim Druckabbau von der Bremspumpe aus dem Lebensmittelprodukt abgenommene Energie nicht ungenutzt zu lassen, ist bei einer besonders zweckmäßigen Ausführungsform die Bremspumpe mit einem elektrischen Generator (elektrische Bremse) gekoppelt oder als solcher ausgebildet, um über den Generator elektrische Energie zu erzeugen, die in oder außerhalb der Vorrichtung für andere Zwecke genutzt werden kann. Zweckmäßig handelt es sich bei dem Generator um einen Elektromotor, der wahlweise mit einer Antriebsfunktion oder einer Generatorfunktion betreibbar ist.

Da für eine hohe Durchsatzrate und infolge der Konsistenz des Lebensmittelproduktes die Förderpumpe relativ viel elektrische Primärenergie benötigt, wird zweckmäßig die vom Generator der Bremspumpe beim Druckabbau erzeugte elektrische Energie zum Antreiben der Förderpumpe oder zu deren Antriebsassistenz eingesetzt, so dass zumindest ein Teil von der Förderpumpe zur Förderung benötigter elektrischer Primärenergie eingespart werden kann. Alternativ könnten auch andere, auf elektrische angewiesene Komponenten der Vorrichtung oder auch Komponenten außerhalb der Vorrichtung die aus dem Druckabbau erzeugte elektrische Energie nutzen, oder könnte diese Energie in einem Speicher zur anderen Verwendung gespeichert werden.

Bei einer zweckmäßigen Ausführungsform ist dem Generator der Bremspumpe wie auch einem Elektromotor der Förderpumpe jeweils ein Frequenzumformer zugeordnet, um das Drehmoment oder die Drehzahl der jeweiligen Pumpe exakt steuern zu können, und wird über eine Verbindung zwischen den Frequenzumformern die beim Druckabbau rückgewonnene elektrische Energie über den Frequenzumformer der Förderpumpe zum Antrieb der Förderpumpe bzw. zur Antriebsassistenz eingesetzt. Über den Frequenzumformer der Bremspumpe lässt sich bei der Stromerzeugung beispielsweise auch eine elektrische Bremswirkung feinfühlig steuern.

Bei einer zweckmäßigen Ausführungsform ist zumindest die Bremspumpe entweder mit konstanter Verdrängung oder mit variierbarer Verdrängung, beispielsweise als Verstellpumpe, ausgebildet. Eine variierbare Verdrängung bietet den Vorteil eines zusätzlichen Betriebsparameters zur feinfühligen Steuerung des Druckabbaus.

Verfahrensgemäß ist es schließlich zweckmäßig, dass die beim Druckabbau in der Bremspumpe vom Lebensmittelprodukt abgegebene Energie in elektrische Energie gewandelt und allgemein zur Einsparung elektrischer Primärenergie genutzt wird. Dadurch lässt sich die Energiebilanz des Verfahrens deutlich verbessern.

Anhand der Zeichnung wird eine Ausführungsform des Erfindungsgegenstandes erläutert.

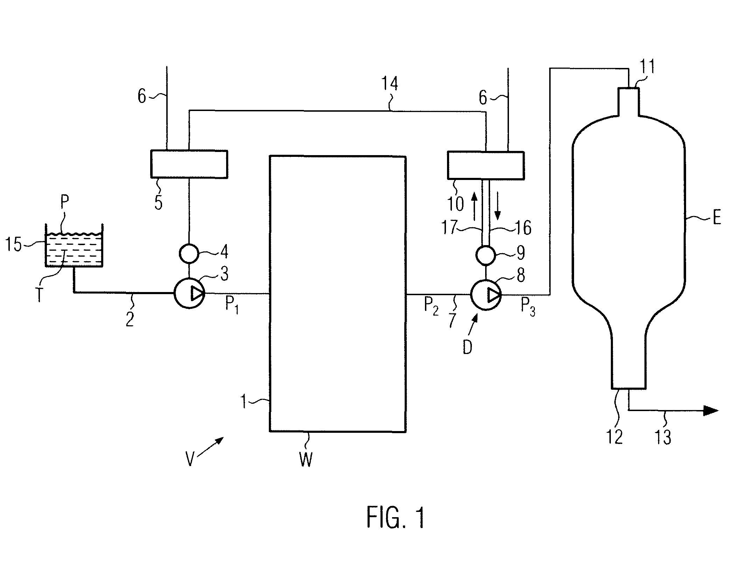

Fig. 1 zeigt eine Schemadarstellung nach Art eines Blockschaltbildes einer Vorrichtung V zum Behandeln flüssiger Lebensmittelprodukte P.

Die Vorrichtung V wird beispielsweise in der Abfülltechnologie für Fruchtsäfte oder Milchprodukte oder dgl. verwendet. Die Vorrichtung V ist speziell für flüssige Lebensmittelprodukte mit darin enthaltenen Feststoffen wie Fasern, Pulpen, Fruchtstückchen, Sacs und dgl. geeignet, könnte aber auch bei der Bierherstellung beispielsweise für Maische oder beim Abfüllen von Zusätze enthaltenden Joghurt verwendet werden.

Die Vorrichtung V weist einen Wärmetauscher W auf, der beispielsweise eine Vorwärmstrecke 1 definiert, und durch den aus einem Reservoir 15 ein Feststoffe T enthaltendes, flüssiges Lebensmittelprodukt P, z.B. durch eine elektrisch angetriebene Förderpumpe 3 mit vorbestimmtem Förderdruck P1 in einem vorbestimmten Produktstrom über eine Förderstrecke 2 gefördert und wärmebehandelt wird, z.B. pasteurisiert, wird. Die Förderpumpe 3 ist mit einem elektrischen Antriebsmotor 4 verbunden. Der Elektromotor 4 könnte in die Förderpumpe 3 eingegliedert sein und ist im Ausführungsbeispiel mit einem Frequenzumformer 5 verbunden, der beispielsweise über eine Leitung 6 elektrische Primärenergie erhält. Stromab des Wärmetauschers W erstreckt sich eine weitere Förderstrecke 7, in der eine Druckreduziervorrichtung D vorgesehen ist, um den Druck des Lebensmittelproduktes P von einem Wärmetauscher-Ausgangsdruck P2 auf einen niedrigeren Druck P3 abzubauen oder gänzlich abzubauen. Ausgangs der Druckreduziervorrichtung D liegt das Lebensmittelprodukt P somit drucklos oder weitgehend drucklos vor.

Die Druckreduziervorrichtung D umfasst zumindest eine Bremspumpe 8, die zweckmäßig eine Verdrängerpumpe ist. Besonders geeignet ist eine Bremspumpe 8 in Form einer Zellenradschleuse, einer Membranpumpe oder einer Zahnradpumpe, d.h. eine Pumpe mit einem rotierenden Pumpenelement. In der gezeigten Ausführungsform ist der Bremspumpe 8 ein elektrischer Generator 9 zugeordnet, der in die Bremspumpe 8 eingegliedert sein kann, und über Leitungen 17, 16 mit einem Frequenzumformer 10 verbunden ist. Der Frequenzumformer 10 kann über eine Leitung 6 elektrische Primärenergie beziehen, beispielsweise um die Bremspumpe 8 über den Generator 9 mit einer wählbaren Drehzahl anzutreiben oder die vom strömenden Lebensmittelprodukt P angetriebene Bremspumpe 8 in wählbarem Ausmaß z.B. elektrisch, abzubremsen. Der Generator 9 kann wahlweise als Antriebsmotor oder elektrischer Generator betrieben werden. Als Antriebsmotor wird er z.B. über die Leitung 16 angesteuert. Als von der Bremspumpe 8 angetriebener Generator 9 erzeugt er elektrische Energie, die z.B. über die Leitung 17 zum Frequenzumformer 10 gebracht wird. Die beiden Frequenzumformer 5, 10 sind z.B. über eine Leitung 14 miteinander verbunden oder baulich zusammengefasst, so dass die rückgewonnene elektrische Energie zum Antreiben der Förderpumpe 3 nutzbar ist, so dass sich für die Förderpumpe 3 elektrische Primärenergie einsparen lässt.

Alternativ könnte die Bremspumpe 8 mechanisch und regelbar gebremst werden.

Aufgabe der Bremspumpe 8 ist es, primär in dem geförderten Lebensmittelprodukt P den Druckabbau vom Druck P2 auf den Druck P3 ohne enge Drosselspalte durch Verdrängerwirkung und Entspannung durchzuführen, um die Feststoffe T des Lebensmittelproduktes P nicht zu schädigen. Sekundäre Aufgabe der Bremspumpe 8 ist eine Rückgewinnung elektrischer Energie aus der beim Druckabbau aus dem Massenstrom des Lebensmittelproduktes P aufgenommenen Leistung.

In der gezeigten Ausführungsform ist als Option dem Wärmetauscher W ein Entgaser E (z.B. Vakuumbehälter) nachgeschaltet, dessen Einlass 11 an die Förderstrecke 7 stromab der Bremspumpe 8 angeschlossen ist und dazu dient, das Lebensmittelprodukt P vor einer Förderstrecke 13 am Ausgang 12 des Entgasers E zu entgasen. Die zum Einlass 11 des Entgasers E führende Förderstrecke 7 enthält die Bremspumpe 8 zum Druckabbau vom Druck P2 auf den Druck P3.

Die Förderstrecke 13 führt beispielsweise in weitere Wärmetauschersektionen, anderweitige notwendige Produktbehandlungskomponenten, oder direkt zu einem Füller.

Die Förderpumpe 3 ist zweckmäßig eine elektrisch angetriebene Schraubspindelpumpe, eine Zahnradpumpe, eine Zellenradschleuse oder eine Membranpumpe.

Eine nicht dargestellte elektronische Steuereinrichtung der Vorrichtung V regelt die Energieflüsse und die Drehzahlen bzw. Leistungen der Förderpumpe 3 und der Bremspumpe 8.

Die Druckreduziervorrichtung D könnte optional mehrere in Serie geschaltete Bremspumpen 8 umfassen, von denen gegebenenfalls zumindest eine oder alle elektrische Energie rückgewinnen lässt bzw. lassen und den Druckabbau über mehrere Stufen für das Lebensmittelprodukt noch schonender ausführen.

Die Vorrichtung V könnte ohne den Wärmetauscher W und mit wenigstens einer Behandlungsstation ausgebildet sein, die einen Druckabbau eines unter Druck geförderten Lebensmittelproduktes erforderlich macht. Auch in diesem Fall könnte stromauf die Bremspumpe 8 platziert werden, mit oder ohne Energie-Rückgewinnung.

Anstelle des Wärmetauschers W könnte wenigstens eine andere Behandlungsstation in der Vorrichtung vorgesehen sein, die eine Förderung des Lebensmittelproduktes unter hohem Druck erforderlich macht, der stromab wieder ganz oder in bestimmtem Ausmaß mit der Bremspumpe 8 abgebaut wird.

## Patentansprüche

1. Vorrichtung (V) zum Behandeln eines Feststoffe (T) enthaltenden flüssigen Lebensmittelproduktes (P), mit einem mit dem Lebensmittelprodukt (P) beschickten Wärmetauscher (W) und/oder Entgaser (E), dem eine Druckreduziervorrichtung (D) nach- bzw. vorgeschaltet ist, **dadurch gekennzeichnet, dass** die Druckreduziervorrichtung (D) wenigstens eine von dem Lebensmittelprodukt (P) unter Förderdruck (P1; P2) durchströmte Bremspumpe (8) aufweist.

2. Vorrichtung nach Anspruch 1, **dadurch gekennzeichnet, dass** die Bremspumpe (8) eine zumindest teilweise vom Lebensmittelprodukt (P) rotierend angetriebene Verdrängerpumpe wie eine Zellenradschleuse oder Zahnradpumpe oder Membranpumpe ist.

3. Vorrichtung nach Anspruch 1, **dadurch gekennzeichnet, dass** stromauf des Wärmetauschers (W), insbesondere des Wärmetauschers (W) einer Vorwärmsektion (1), eine mit elektrischer Primärenergie betriebene Förderpumpe (3) vorgesehen ist, vorzugsweise eine Schraubspindelpumpe oder Membranpumpe mit einem elektrischen Antriebsmotor (4).

4. Vorrichtung nach Anspruch 1, **dadurch gekennzeichnet, dass** der Entgaser (E) dem Wärmetauscher (W) nachgeordnet ist, und dass die Bremspumpe (8) in einer Förderstrecke (7) vom Wärmetauscher (W) zum Entgaser (E) angeordnet ist.

5. Vorrichtung nach Anspruch 1, **dadurch gekennzeichnet, dass** die Bremspumpe (8) elektrisch antreibbar oder abbremsbar ist.

6. Vorrichtung nach wenigstens einem der vorhergehenden Ansprüche, **dadurch gekennzeichnet, dass** die Bremspumpe (8) mit einem elektrischen Generator (9), vorzugsweise einem wahlweise als Elektromotor oder Generator betreibbaren Generator (9), gekoppelt oder als solcher ausgebildet ist, und von der Bremspumpe (8) über den Generator (9) aus vom geförderten Lebensmittelprodukt (P) in der Bremspumpe (8) aufgenommener Energie elektrische Energie erzeugbar ist.

7. Vorrichtung nach Anspruch 6, **dadurch gekennzeichnet, dass** vom Generator (9) über die Bremspumpe (8) erzeugte elektrische Energie zumindest zum teilweisen Versorgen einer anderen Komponente der Vorrichtung (V), vorzugsweise einer stromauf des Wärmetauschers (W) angeordneten Förderpumpe (3), nutzbar ist.

8. Vorrichtung nach wenigstens einem der vorhergehenden Ansprüche, **dadurch gekennzeichnet, dass** dem Generator (9) der Bremspumpe (8) ein Frequenzumformer (10) zugeordnet ist, der mit einem anderen Frequenzumformer (5) in der Vorrichtung (V), vorzugsweise dem der Förderpumpe (3), verschaltet ist.

9. Vorrichtung nach Anspruch 1, **dadurch gekennzeichnet, dass** die Bremspumpe (8) mit konstanter Verdrängung oder variierbarer Verdrängung, vorzugsweise als Verstellpumpe, ausgebildet ist.

10. Verfahren zum Behandeln eines Feststoffe (T) enthaltenden, flüssigen, geförderten Lebensmittelproduktes (P) in einer Vorrichtung (V) mit wenigstens einem Wärmetauscher (W) und/oder Entgaser (E), **dadurch gekennzeichnet, dass** das Lebensmittelprodukt (P) mit Druck (P1, P2) durch wenigstens eine Bremspumpe (8) hindurchgefördert und der Druck (P2) von stromab des Wärmetauschers (W) nach stromauf des Entgasers (E) über eine Antriebsbewegung der Bremspumpe (8) vollständig oder auf einen niedrigeren Druck (P3) abgebaut wird.

11. Verfahren nach Anspruch 10, **dadurch gekennzeichnet, dass** die beim Druckabbau in der Bremspumpe (8) aus der Druckdifferenz (P2 - P3) vom Lebensmittelprodukt (P) an die Bremspumpe (8) abgegebene Energie über einen von der Bremspumpe (8) angetriebenen Generator (9) in elektrische Energie gewandelt und zur Primärenergie-Einsparung, vorzugsweise in der Vorrichtung (V) zum Antrieb oder assistierenden Antrieb einer Förderpumpe (3), genutzt wird.
